(19) Europäisches Patentamt / European Patent Office / Office européen des brevets

(11) **EP 4 521 649 A1**

(12) **EUROPEAN PATENT APPLICATION**
published in accordance with Art. 153(4) EPC

(43) Date of publication:
**12.03.2025 Bulletin 2025/11**

(21) Application number: **23839852.3**

(22) Date of filing: **30.06.2023**

(51) International Patent Classification (IPC):
**H04B 1/3827** (2015.01)    **H04W 52/18** (2009.01)
**H04W 52/30** (2009.01)    **H04B 7/06** (2006.01)

(52) Cooperative Patent Classification (CPC):
**H04B 1/3827; H04B 7/06; H04W 52/18;
H04W 52/30**

(86) International application number:
**PCT/KR2023/009256**

(87) International publication number:
**WO 2024/014758 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022 KR 20220086213
18.08.2022 KR 20220103634**

(71) Applicant: **Samsung Electronics Co., Ltd.
Suwon-si, Gyeonggi-do 16677 (KR)**

(72) Inventors:
• **KIM, Dohun
Suwon-si Gyeonggi-do 16677 (KR)**
• **GHIM, Jaegon
Suwon-si Gyeonggi-do 16677 (KR)**

• **LEE, Sangdon
Suwon-si Gyeonggi-do 16677 (KR)**
• **JANG, Kyujae
Suwon-si Gyeonggi-do 16677 (KR)**
• **JANG, Jihyeon
Suwon-si Gyeonggi-do 16677 (KR)**
• **CHO, Sungyoul
Suwon-si Gyeonggi-do 16677 (KR)**
• **KOO, Jimin
Suwon-si Gyeonggi-do 16677 (KR)**
• **LEE, Deokhee
Suwon-si Gyeonggi-do 16677 (KR)**

(74) Representative: **HGF
HGF Limited
1 City Walk
Leeds LS11 9DX (GB)**

(54) **METHOD AND APPARATUS FOR CONTROLLING SPECIFIC ABSORPTION RATE**

(57)     The electronic device comprises one or more processors, one or more RF circuits, and a plurality of antennas, wherein the one or more processors are configured to: control at least some of the one or more RF circuits so that one or more first RF signals having one or more first transmission powers set on the basis of first threshold transmission power corresponding to a first antenna from among the plurality of antennas are applied to the first antenna during a first period; identify, on the basis of that a first accumulated SAR during the first period corresponding to the one or more first RF signals satisfies a back-off condition set for a designated time duration, a second antenna for transmitting an RF signal from among the plurality of antennas; identify a second period during which transmission is possible with a second threshold transmission power corresponding to the second antenna, set on the basis of an accumulated SAR threshold; identify a non-transmission period during which the back-off of threshold transmission power is not required, and which is set one the basis of the first threshold transmission power and a SAR residual amount obtained by subtracting, from the accumulated SAR threshold, the first accumulated SAR during the first period; and control at least one some of the one or more RF circuits so that one or more second RF signals having one or more second transmission power set on the basis of second threshold transmission power corresponding to the second antenna is applied to the second antenna during the shorter of periods between the second period and the non-transmission period.

(Cont. next page)

FIG. 4

**Description**

[Technical Field]

Various embodiments of the disclosure relate an electronic device for performing an operation based on a specific absorption rate (SAR).

[Background Art]

A wireless communication device may receive and transmit a radio frequency signal by using a radio frequency (RF) circuit, and transmit a radio frequency signal. However, radiation of the RF signal means generation of electromagnetic waves, and thus may cause harm to the human body if the electromagnetic waves are absorbed by the human body. In general, the RF signal absorbed by the human body from the wireless communication device may be measured using a specific absorption rate (SAR). The SAR is a measurement of the RF signal absorbed per unit mass by a material within a unit time and measured in watts per kilogram (W/kg).

Devices using hopping that improves transmission capability by changing a transmission path (TX path) to an antenna having high reference signals received power (RSRP) among one or more reception antennas included in a wireless communication device are increasing. For example, when the SAR margin is exhausted due to a time average SAR operation, it is possible to improve total radiated RF power (TRP) without power back off by changing the transmission antenna. However, in a weak electric field area where threshold (or maximum) power should be continuously used or in environments where limit of transmission power is low (Plimit) due to a gripping condition or a hot spot, when the time average SAR margin is all exhausted, if all of the antennas capable of transmitting transmission signals become in the power backoff condition, repetitive hopping of transmission antennas is generated. When antenna hopping is repeated, a change in transmission power may be relatively frequently generated, a connection to a base station (BS) becomes unstable, and thus information of an electronic device cannot be accurately transferred to the BS through a physical uplink control channel (PUCCH).

[Detailed Description of the Invention]

[Technical Solution]

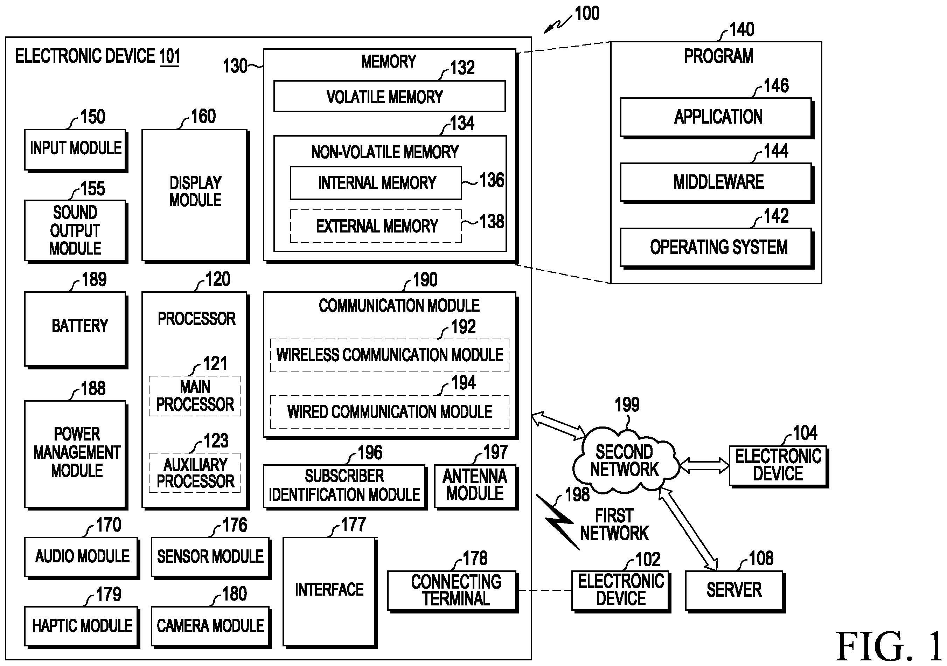

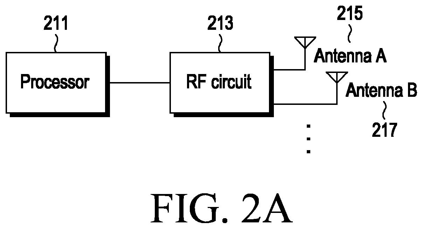

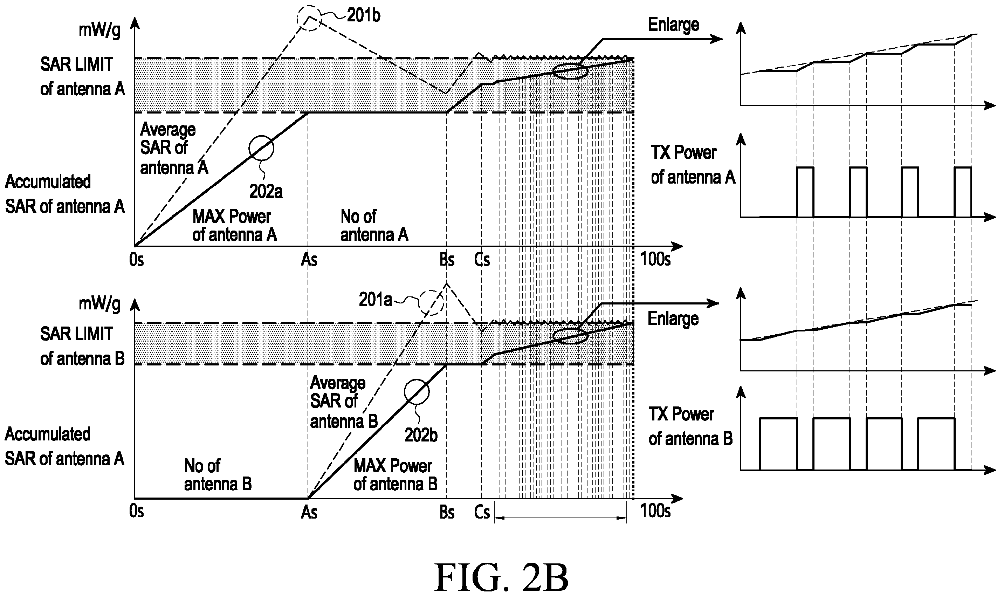

According to an embodiment of the disclosure, an electronic device 101 of FIG. 1 may include at least one processor 120 of FIG. 2, at least one RF circuit connected to the at least one processor, and a plurality of antennas 197 of FIG. 1 connected to the at least one RF circuit. The at least one processor 120 of FIG. 1 of the disclosure may be configured to control at least a portion of the at least one RF circuit to apply at least one first RF signal having at least one first transmission power, configured based on first threshold transmission power corresponding to a first antenna among the plurality of antennas 197 of FIG. 1, to the first antenna during a first period. The at least one processor 120 of FIG. 1 of the disclosure may be configured to identify a second antenna for transmitting an RF signal among the plurality of antennas, based on a first accumulated SAR during the first period corresponding to the at least one first RF signal satisfying a backoff condition configured for a predetermined time period. Even though the backoff condition is satisfied, backoff (hereinafter, reduction or power reduction may be used instead of the backoff) of threshold transmission power corresponding to the first antenna may not be performed. The at least one processor 120 of FIG. 1 of the disclosure may be configured to identify a second period during which transmission is possible with second threshold transmission power corresponding to the second antenna (217 of FIG. 2) configured based on a threshold value of an accumulated SAR. The at least one processor 120 of FIG. 1 of the disclosure may be configured to identify a non-transmission period which is configured based on an SAR residual amount obtained by subtracting the accumulated SAR during the first period from the threshold value of the accumulated SAR and the first threshold transmission power and in which backoff of threshold transmission power is not required. The at least one processor 120 of FIG. 1 of the disclosure may be configured to control at least a portion of the at least one RF circuit to apply at least one second RF signal having at least one second transmission power, configured based on second threshold transmission power corresponding to the second antenna, to the second antenna during a shorter period between the second period and the non-transmission period.

A method of an electronic device 101 of FIG. 1 according to an embodiment of the disclosure may include an operation of controlling at least a portion of at least one RF circuit to apply at least one RF signal having at least one first transmission power, configured based on first threshold transmission power corresponding to a first antenna among a plurality of antennas included in the electronic device 101 of FIG. 1, to the first antenna during a first period The method of the electronic device according to an embodiment of the disclosure may include an operation of identifying a second antenna for transmitting an RF signal among the plurality of antennas, based on a first accumulated SAR during the first period corresponding to the at least one first RF signal satisfying a backoff condition configured for a predetermined time period. Even though the backoff condition is satisfied, backoff of threshold transmission power corresponding to the first antenna may not be performed. The method of the electronic device according to an embodiment of the disclosure may include an operation of identifying a second period during which transmission is possible with second threshold transmission power corresponding to the second antenna configured based on a threshold value of an accumulated SAR. The method of the electronic device according to an embodiment of the disclosure may include an operation of identifying a non-transmission period which is configured based on an SAR residual amount obtained by subtracting the accumulated SAR during the first period from the threshold value of the accumulated SAR and the first threshold transmission power and in which backoff of threshold transmission power is not required. The method of the electronic device according to an embodiment of the disclosure may include an operation of controlling at least a portion of the at least one RF circuit to apply at least one second RF signal having at least one second transmission power, configured based on second threshold transmission power corresponding to the second antenna, to the second antenna during a shorter period between the second period and the non-transmission period.

[Brief Description of Drawings]

FIG. 1 is a block diagram of an electronic device within a network environment according to various embodiments.
FIG. 2A illustrates an electronic device including a plurality of antennas according to an embodiment of the disclosure.
FIG. 2B illustrates antenna switching according to an SAR operation within an average time with respect to a plurality of antennas.
FIG. 3 illustrates an accumulated SAR through a time sliding scheme in a hopping operation of two antennas.
FIG. 4 illustrates antenna switching in one time interval when T2 is larger than T1 according to an embodiment of the disclosure.
FIG. 5 illustrates antenna switching in one time interval when T1 is larger than T2 according to an embodiment of the disclosure.
FIG. 6 is a flowchart illustrating an operation of the electronic device according to an embodiment of the disclosure.
FIG. 7 is a flowchart illustrating an operation of the electronic device according to various embodiments of the disclosure.
FIG. 8 illustrates frequent switching between antennas according to a comparative embodiment.
FIG. 9 illustrates transmission power for each time based on an antenna switching operation according to an embodiment of the disclosure.
FIG. 10 illustrates transmission power for each time based on the antenna switching operation according to another embodiment of the disclosure.

[Mode for Carrying out the Invention]

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).
The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

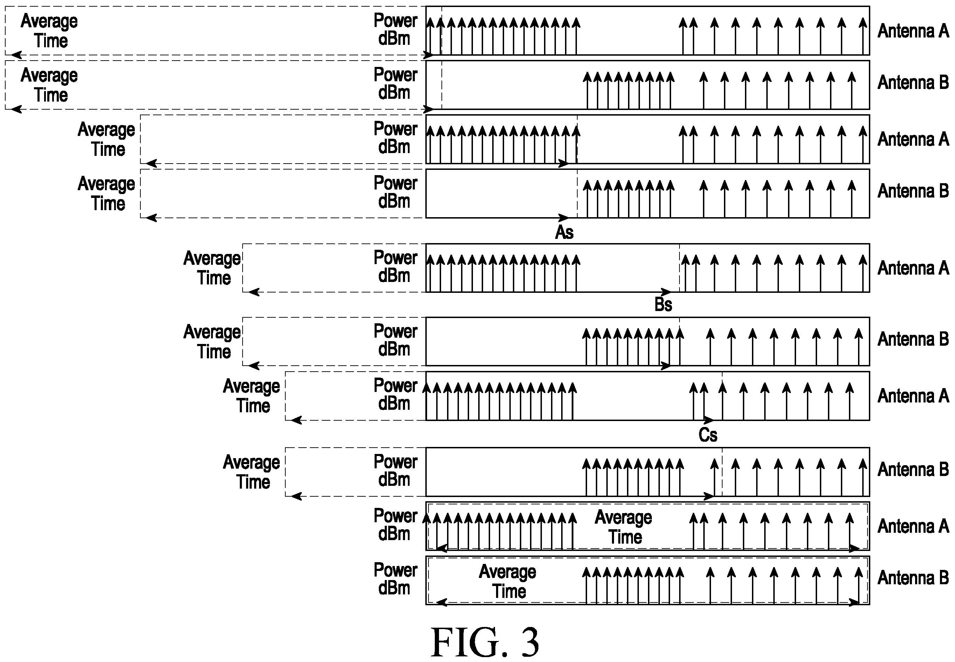

FIG. 2A illustrates an electronic device including a plurality of antennas according to an embodiment of the disclosure. FIG. 2B illustrates antenna switching according to an SAR operation within an average time with respect to a plurality of antennas. FIG. 3 illustrates an accumulated SAR in a time sliding scheme in a hopping operation of two antennas.

The technical problem to be solved in the disclosure may not be limited to the above mentioned technical problem, and other technical problems which are not mentioned may be clearly understood, through the following descriptions, by those skilled in the art of the disclosure.

Referring to FIG. 2A, an electronic device (for example, the electronic device 101 of FIG. 1) according to an embodiment of the disclosure may include at least one processor (for example, a processor 211 of FIG. 2A), at least one RF circuit (for example, an RF circuit 213, an RFIC, and/or an RFFE of FIG. 2A), and a plurality of antennas (for example, an antenna A 215 and an antenna B 217 of FIG. 2A). For example, the plurality of antennas may include the antenna A 215 of FIG. 2A and the antenna B 216 of FIG. 2A. For example, one or more of the plurality of antennas are antennas for transmitting and/or receiving RF signals and may be operatively connected to an amplifier (power amplifier) and/or a low noise amplifier (LNA) corresponding to each signal.

In a method of switching between antennas among a plurality of antennas included in the electronic device according to an embodiment of the disclosure, when [Equation 1] is met in the case where the antenna A 215 of FIG. 2A transmits a signal, the transmission antenna may switch to the antenna B 217 of FIG. 2A.

[Equation 1]

$$B_{RSRP} - A_{RSRP} > RSRP_{Threshold}$$

[Equation 1] is an equation that generates a hopping operation of a transmission antenna. The hopping operation is generated when a value obtained by subtracting an RSRP value of the antenna B 217 of FIG. 2A from an RSRP value of the antenna A 215 of FIG. 2A is larger than an RSRP threshold value. In other words, when the RSRP difference between the antennas is higher than the RSRP threshold value, the transmission antenna may switch to an antenna that reports a better reception electric field. For example, when the RSRP of the antenna 215 of FIG. 2A is about -73 dBm, the RSRP of the antenna B 217 of FIG. 2A is about -70 dBm, and the RSRP threshold values is configured as about 5 dB, the left side 3 dBm is smaller than the right side 5 dBm, and thus the antenna hopping operation is not generated. On the other hand, when the RSRP of the antenna 215 of FIG. 2A is about -73 dBm, the RSRP of the antenna B 217 of FIG. 2A is about -65 dBm, and the RSRP threshold values is configured as about 5 dB, the left side 8 dBm is larger than the right side 5 dBm, and thus the antenna hopping operation may be generated.

When a maximum tx power limit (MTPL) of transmission antennas among a plurality of antennas included in the electronic device (for example, the processor 120) according to an embodiment of the disclosure is changed, the method of switching between antennas may follow [Equation 2].

[Equation 2]

$$B_{RSRP} - A_{RSRP} > RSRP_{Threshold} - (B_{MTPL} - A_{MTPL})$$

When the transmission MTPL of the antenna 215 of FIG. 2A is backed off due to the SAR operation, transmission MTPL values of the antenna 215 of FIG. 2A and the antenna B 217 of FIG. 2A have difference, and the difference is reflected in the RSRP threshold value on the right side. In other words, antenna hopping operates when an RSRP gain obtained when the transmission antenna is changed and a transmission power gain are higher than a configured threshold. For example, when the reception RSRP of the antenna A 215 of FIG. 2A is about -73.1 dBm, the reception RSRP of the antenna B 217 of FIG. 2A is about -72.8 dBm, and the RSRP threshold value is configured as about 5 dBm, the left side is about 0.3 dB. When the SAR margin of the antenna A 215 of FIG. 2A is exhausted from 5 dB corresponding to the RSRP threshold value and thus the transmission MTPL of the antenna A 215 of FIG. 2A is backed off, backoff power becomes 14.5 dBm (for example, backoff power is 14.5 dBm obtained by subtracting about 3 dB from Plimit when Plimit of the antenna A 215 of FIG. 2A is about 17.5 dBm) and about 8 dB corresponding to the difference from about 22.5 dBm of the transmission MTPL is reflected, so the right side is -3 dB. Accordingly, the left side is smaller than the right side and thus is suitable for the antenna hopping equation, so that the transmission antenna is changed from the antenna A 215 of FIG. 2A to the antenna B 217 of FIG. 2A. For example, when the transmission antenna is changed according to an antenna hopping operation condition, the transmission antenna may be changed from the antenna A 215 of FIG. 2A to the antenna B 217 of FIG. 2A. In this case, in [Equation 1] and [Equation 2], B RSRP (or B MTPL) is a value of the antenna A 215 of FIG. 2A, and A RSRP (or A MTPL) may be substituted into a value of the antenna B 217 of FIG. 2A.

The time average SAR operation of the disclosure controls average transmission power during a determined period to be allowable average power by reducing threshold (or maximum) instantaneous transmission power when an average value of a total of SAR values in the determined average time exceeds a predetermined SAR. For example, during the time average SAR operation, backoff of transmission power may be generated as shown in [Equation 3].

$$[Equation\ 3]$$
$$A+B+C > SAR\ threshold\ value$$

A denotes an SAR used up to the current time, B denotes a threshold SAR during the current P time (P being a measured time in units of 1s), C denotes a minimum SAR (backoff usage) used until the average time (for example, time window of 100s) finishes from the current time. The SAR threshold value is a limit of transmitting threshold power while complying with a regulation limit of average RF exposure in a predetermined time interval, and the electronic device (for example, 101 of FIG. 1) may back off the power and comply with the standard when power exceeding the SAR threshold value is transmitted. With respect to each antenna of the electronic device (for example, 101 of FIG. 1), the antenna hopping operation according to the SAR threshold value may be described according to an amount of the SAR over time.

Referring to FIG. 2B, FIG. 2B illustrates an amount of the SAR according to time of the antenna A 215 of FIG. 2A and the antenna B 217 of FIG. 2A corresponding to antennas of the plurality of antennas included in the electronic device 101 (for example, the processor 120) according to an embodiment of the disclosure, transmission power, and antenna switching with the passage of time within the average time.

Since a solid line 202a of FIG. 2B expresses an accumulated SAR when the antenna A 215 of FIG. 2A transmits threshold power, straight lines (for example, intervals 0 to A s of FIG. 2B) having a predetermined slope may be formed with the passage of time. For example, when the antenna A 215 of FIG. 2A meets the backoff condition, the electronic device 101 (for example, the processor 120) may transmit power smaller than threshold power as the threshold transmission power limit is backed off. For example, when the antenna A 215 of FIG. 2A meets the backoff condition and thus the backoff is applied to the antenna A 215 of FIG. 2A, an accumulated SAR graph of the antenna A 215 of FIG. 2A may form straight lines (for example, intervals B s to C s of FIG. 2B) having a slope smaller than that before entering the backoff interval. For example, power is not consumed by the antenna A 215 of FIG. 2A, the accumulated SAR of the antenna A 215 of FIG. 2A may be maintained as a predetermined value (for example, intervals A s to B s of FIG. 2B).

A dotted line 201a of FIG. 2 expresses the average SAR of the antenna A 215 of FIG. 2A according to time. For example, it may be identified that the average SAR per time increases (for example, intervals 0 to A s of FIG. 2B) when threshold power is used by the antenna A 215 of FIG. 2A, but the dotted line 201a of the average SAR drops (for example, intervals A s to B s of FIG. 2B) when power is not used by the antenna A. For example, it may be identified that the average SAR of each antenna converges on each SAR threshold value in intervals (for example, after Cs of FIG. 2B) in which frequent switching between antennas is generated due to an SAR residual amount of the antenna A 215 of FIG. 2A and the antenna B 217 of FIG. 2A. Further, threshold power is transmitted alternately from the antenna A 215 of FIG. 2A and the antenna B 217 of FIG. 2A in the intervals (for example, after Cs of FIG. 2B) in which frequent switching between antennas is generated, which may be repeated until the accumulated SAR reaches the SAR threshold value.

Referring to FIG. 2B, when the electronic device 101 (for example, the processor 120) transmits threshold power through the antenna A 215 of FIG. 2A for a predetermined time from 0 s (sec) to A s, and then enters the backoff interval (for example, after A s of FIG. 2B), the threshold transmission power limit of the antenna A 215 of FIG. 2A may be backed off due to the time average SAR operation and switches to the antenna B 217 of FIG. 2A at the time point A s. For example, the electronic device 101 (for example, the processor 120) may not use power for the antenna A 215 of FIG. 2A after the time point A s of FIG. 2B. For example, from A s to B s of FIG. 2B, the electronic device 101 (for example, the processor 120) may transmit threshold power through the antenna B 217 of FIG. 2A. For example, the threshold transmission power limit of the antenna B 217 of FIG. 2A may be backed off at the time point B s, but the electronic device 101 (for example, the processor 120) may switch to the antenna A 215 of FIG. 2A before the backoff. For example, the antenna B 217 of FIG. 2A of the electronic device 101 (for example, the processor 120) may switch to another antenna before the backoff after the threshold power is used. For example, from B s to C s of FIG. 2B, the electronic device 101 (for example, the processor 120) may switch from the antenna B 217 of FIG. 2A to the antenna A 215 of FIG. 2A at the time point B s and transmit threshold power through the antenna A 215 of FIG. 2A. For example, the electronic device 101 (For example, the processor 120) may enter the backoff interval immediately after transmitting some of the SAR residual amount because the remaining amount of the left SAR of the antenna A 215 of FIG. 2A is small. For example, the electronic device 101 (for example, the processor 120) may switch soon to the antenna B 217 of FIG. 2A because of the small SAR residual amount of the antenna A 215 of FIG. 2A after the time point C s of FIG. 2B and immediately enter the backoff interval because of the small SAR residual amount of the switched antenna B 217 of FIG. 2A. For example, referring to the enlarged part of FIG. 2B, the antenna A 215 of FIG. 2A and the antenna B 217 of FIG. 2A may frequently switch. When the time average SAR operation is performed, such a frequent switching operation may have intervals in which the frequency switching operation is generated until both the antenna A 215 of FIG. 2A and the antenna B 217 of FIG. 2A consume the SAR residual amount.

As a result, as illustrated in FIG. 2B, switching between antennas is after transmission of backed off power of each antenna, and a hysteresis interval in which power is changed from backed off power to threshold power may be generated. For example, in the hysteresis interval, in consistent power may be transmitted to the BS. In other words, since inconsistent power may be temporarily transmitted in response to power requested by the BS, the connection with the BS may become unstable and accurate channel information cannot be transferred to the BS. For example, when frequent switching between antennas is generated, data may be lost in an uplink channel due to changed timing of a transmission path.

FIG. 3 illustrates an accumulated amount of SAR in a time sliding scheme during a hopping operation of a plurality of antennas.

For each antenna of the electronic device (for example, 101 of FIG. 1), the antenna hopping operation according to an SAR threshold value may be described in a time sliding (time window sliding) scheme. Referring to FIG. 3, an accumulated amount of SAR in the case where the transmission antenna switches due to the hopping operation of the antenna A 215 of FIG. 2A and the antenna B 217 of FIG. 2A may be illustrated. According to a comparative embodiment, in connection with a backoff condition of the electronic device, the threshold transmission power limit of each antenna may be backed off not to exceed the SAR threshold value within the average time after an SAR value accumulated up to A s while the SAR value is accumulated in the time sliding scheme. For example, the antenna A 215 of FIG. 2A may transmit a signal at the threshold SAR until a specific time (for example, A s), and the signal may be transmitted from the antenna B 217 of FIG. 2A after A s. When transmitting again the signal after A s, the antenna A 215 of FIG. 2A may transmit the signal with backed off power not to exceed the SAR threshold value within the average time.

Referring to FIG. 3, it may be identified that the electronic device 101 (for example, the processor 120 does not transmit power through the antenna B 217 of FIG. 2A while transmitting threshold transmission power through the antenna A 215 of FIG. 2A until A s according to the lapse of time, and then the antenna A 215 of FIG. 2A switches to the antenna B 217 of FIG. 2A before entering the interval in which the threshold transmission power limit of the antenna A 215 of FIG. 2A is backed off and thus threshold power is transmitted from the antenna B 217 of FIG. 2A. For example, the electronic device 101 (for example, the processor 120) may switch back to the antenna A 215 of FIG. 2A from the antenna B before entering the backoff interval. Referring to FIG. 3, it may be identified that the antenna B 217 of FIG. 2A transmits a signal during a time interval from A s to B s shorter than a time interval from 0 s to A s. Further, referring to Fig. 3, it may be identified that, when the antenna A 215 of FIG. 2A switches back to the antenna B 217 of FIG. 2A at a time point of C s, a signal is transmitted from the antenna B 217 of FIG. 2A during a time interval from B s to C s shorter than the time interval from A s to B s. As described above, it may be identified that the SAR residual amount of each antenna becomes smaller and thus a time point during which the antenna switches becomes shorter. In other words, it may be identified that a frequency antenna change is generated while the remaining amounts of SAR of two antennas are gradually exhausted in the average time interval.

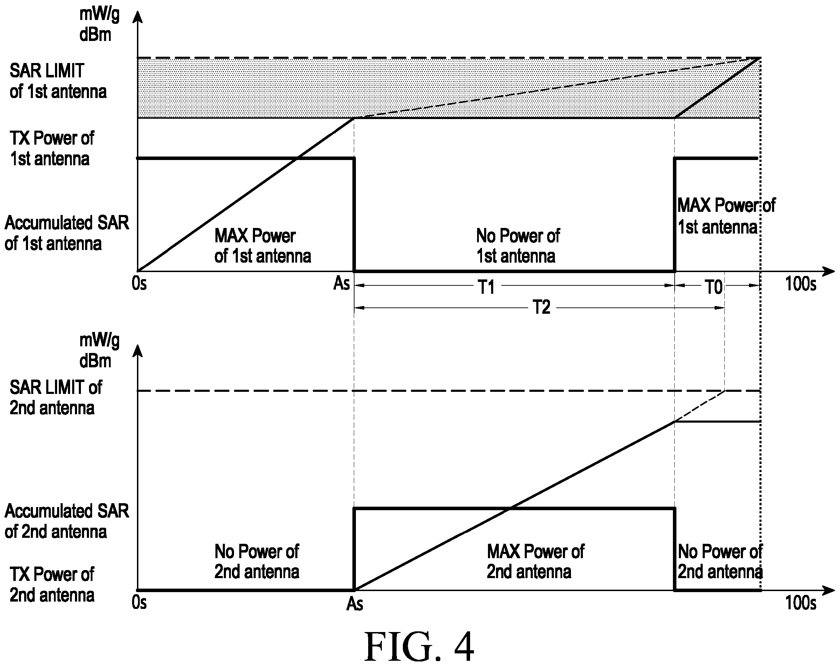

FIG. 4 illustrates antenna switching in one time interval when T1 is larger than T2 according to an embodiment of the disclosure.

The electronic device 101 (for example, the processor 120) according to an embodiment of the disclosure may control the power usage according to the SAR operation with the passage of time within the average time with respect to a first antenna (for example, the first antenna 215 of FIG. 2A) and a second antenna (for example, the antenna B 217 of FIG. 2A) having different priorities among a plurality of antennas included in the electronic device. An operation of determining the antenna priorities may follow a method described below. For example, the electronic device 101 (for example, the processor 120) according to an embodiment of the disclosure may reach a time point of A s at which the electronic device enters a backoff SAR usage interval when the first antenna (for example, the antenna A 215 of FIG. 2A) configured to have a high priority according to the antenna priorities transmits threshold transmission power. The electronic device 101 (for example, the processor 120) according to an embodiment of the disclosure may use the second antenna (for example, the antenna B 217 of FIG. 2A) as a transmission antenna without backoff of the threshold transmission power limit corresponding to the first antenna (for example, the antenna A 215 of FIG. 2A) at the time point of A s. For example, the electronic device 101 (for example, the processor 120) according to an embodiment of the disclosure may transmit threshold power from the second antenna (for example, the antenna B 217 of FIG. 2A) up to an SAR threshold value available for the average time without calculating the SAR usage that makes backoff of the threshold transmission power limit corresponding to the second antenna. For example, the electronic device 101 (for example, the processor 120) may calculate a time interval T1 at the time point of A s. For example, when the first antenna (for example, the antenna A 215 of FIG. 2A) is returned as the transmission antenna from a time point at which the second antenna (for example, the antenna B 217 of FIG. 2A) is changed as the transmission antenna due to transmission antenna hopping, the electronic device 101 (for example, the processor 120) may calculate T1 as the time interval up to a start time point at which threshold power can be used with the SAR residual amount. Further, the electronic device 101 (for example, the processor 120) according to an embodiment of the disclosure may start a timer T2 at the time point of A s. For example, the timer T2 may run from a time point at which the second antenna (for example, the antenna B 217 of FIG. 2A) is changed as the transmission antenna. The electronic device 101 (for example, the processor 120) according to an embodiment of the disclosure may transmit threshold power without backoff of the threshold transmission power limit corresponding to the second antenna (for example, the antenna B 217 of FIG. 2A).

When the time interval T1 is shorter than a threshold time of the timer T2, the electronic device 101 (for example, the processor 120) according to an embodiment of the disclosure may return the transmission antenna to the first antenna (for example, the antenna A 215 of FIG. 2A) after the time interval T1 and transmit threshold transmission power with the SAR residual amount. In other words, the first antenna (for example, the antenna A 215 of FIG. 2A) may be an antenna that can use threshold power longer than other antennas.

When the number of transmission antennas is two or more, the electronic device 101 (for example, the processor 120) according to an embodiment of the disclosure may move to an antenna, such as the second antenna (for example, the antenna B 217 of FIG. 2A), a third antenna (not shown), or a fourth antenna (not shown) having a priority lower than the first antenna (for example, the antenna A 215 of FIG. 2A) and transmit a signal through each of the moved antennas with threshold power before the time interval T1 passes. At this time, the threshold time of the timer T2 may be a time until the SAR is all consumed with threshold transmission power without backoff of the antennas having the lower priority (for example, the third antenna) including the second antenna (for example, the antenna B 217 of FIG. 2A). The electronic device 101 (for example, the processor 120) according to an embodiment of the disclosure may transmit, through the second antenna (for example, the antenna B 217 of FIG. 2A), threshold power up to the SAR threshold value available within the average time without backoff until the time interval T1 passes during running of the timer T2, and switch to the third antenna (not shown) corresponding to the antenna having the lower priority than the second antenna (for example, the antenna B 217 of FIG. 2A). For example, when the time interval T1 passes during running of the timer T2, the electronic device 101 (for example, the processor 120) may return to the first antenna (for example, the antenna A 215 of FIG. 2A) and transmit a signal with threshold power through the first antenna (for example, the antenna A 215 of FIG. 2A). For example, the electronic device 101 (for example, the processor 120) may return to the first antenna (for example, the antenna A 215 of FIG. 2A) from the antenna having the lower priority if the first antenna (for example, the antenna A 215 of FIG. 2A) can transmit threshold power with the SAR residual amount within the average time.

According to an embodiment of the disclosure, a method of calculating the time interval T1 may be described below. For example, the time interval T1 may be calculated using an equation of the A+B+C=SAR threshold value in [Equation 3]. For example, it may be assumed that an amount of SAR (SAR threshold value) available for the average time is about 50 mW/g, the average time is about 100 s, a measurement period (P) is 1 s, and the SAR usage for the current P time is about 1 mW/g*P. For example, it is assumed that A is an amount of SAR used up to the current time and is about 29 mW/g, and B is a threshold SAR value for current P hours, that is, about 1 mW/g, and C is a minimum amount of SAR used until the average time (about 100 s) finishes from the current time and may be the SAR that can be used by the first antenna (for example, the antenna A 215 of FIG. 2A) with threshold power. Accordingly, through the above equation, it may be identified that T0 is calculated as (SAR threshold value - A - B) / 1 mW/g in 50(SAR threshold value) - 29(A) - 1(B) = 1mW/g * T0. Further, the time interval T1 may be calculated as about 50 s from a time point (30 s) at which the transmission antenna is changed to the second antenna (for example, the antenna B of FIG. 2A) to a T0 start time point (100 s - 20 s = 80 s).

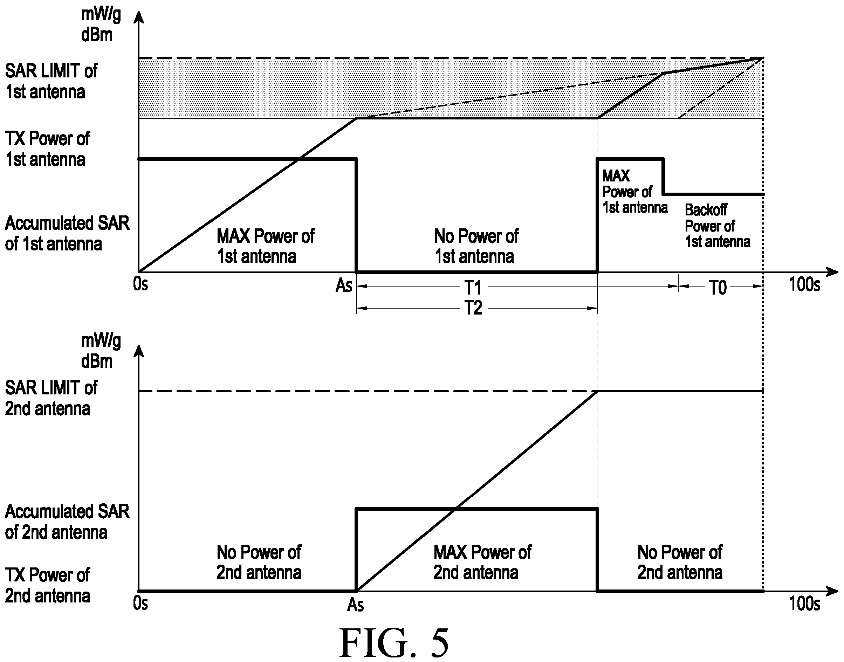

FIG. 5 illustrates antenna switching in one time interval when T1 is larger than T2 according to an embodiment of the disclosure.

Referring to FIG. 5, the electronic device 101 (for example, the processor 120) according to an embodiment of the disclosure may select a first antenna (for example, the antenna A 215 of FIG. 2A) corresponding to a first priority antenna according to an operation of determining the antenna priority described below and identify the accumulated SAR and power usage of the first antenna (for example, the antenna A 215 of FIG. 2A). For example, when the transmission power usage of the first antenna (for example, the antenna A 215 of FIG. 2A) enters a backoff SAR usage interval, the electronic device 101 (for example, the processor 120) according to an embodiment of the disclosure may switch the transmission antenna from the first antenna (for example, the antenna A 215 of FIG. 2A) to a second antenna (for example, the antenna B 217 of FIG. 1A). The electronic device 101 (for example, the processor 120) according to an embodiment of the disclosure does not calculate the backoff SAR usage of the second antenna (for example, the antenna B 217 of FIG. 2A) and may transmit a power with threshold power up to the SAR threshold value available for the average time without backoff. In other words, the electronic device 101 (for example, the processor 120) may transmit the signal by using the threshold power before switching without backoff of the threshold transmission power limit of the first antenna (for example, the antenna A 215 of FIG. 2A) and the second antenna (for example, the antenna B 217 of FIG. 2A). For example, since the electronic device 101 (for example, the processor 120) switches to the second antenna (for example, the antenna B 217 of FIG. 2A) at the time point of A s at which the accumulated SAR value of the first antenna (for example, the antenna A 215 of FIG. 2A) enters the backoff SAR usage interval, the first antenna (for example, the antenna A 215 of FIG. 2A) may not use transmission power after the time point of A s. For example, the electronic device 101 (for example, the processor 120) does not use power for the second antenna (for example, the antenna B 217 of FIG. 2A) before the time point of A s but may transmit a signal with threshold power through the second antenna (for example, the antenna B 217 of FIG. 2A) after switching. The electronic device 101 (for example, the processor 120) according to an embodiment of the disclosure may calculate T1 at the time point of A s. For example, T1 may be a time interval that continues from a time point at which the first antenna (for example, the antenna A 215 of FIG. 2A) switches to the second antenna (for example, the antenna B 217 of FIG. 2A) during antenna hopping to a start time point at which threshold power can be used with the remaining amount SAR within the average time when the antenna is returned to the first antenna (for example, the antenna A 215 of FIG. 2A).

Referring to FIG. 5, the electronic device 101 (for example, the processor 120) according to an embodiment of the disclosure may start the timer T2 at the time point of A s. For example, the timer T2 may be a timer starting from the time point at which the first antenna (for example, the antenna B 217 of FIG. 2A) switches to the second antenna (for example, the antenna B 217 of FIG. 2A). For example, the electronic device 101 (for example, the processor 120) may transmit a signal with threshold power without backoff of the threshold transmission power limit of the second antenna (for example, the antenna B 217 of FIG. 2A) from the time point at which the timer T2 runs. For example, the electronic device 101 (for example, the processor 120) having two or more transmission antennas may switch to the third antenna (not shown) corresponding to an antenna having a lower priority than the second antenna (for example, the antenna B 217 of FIG. 2A) and transmit a signal with threshold power through the third antenna (not shown). For example, all of the antennas having the lower priority than the second antenna (for example, the antenna B 217 of FIG. 2A) may transmit the signal with threshold power to exhaust all SAR values before backoff. For example, when the time interval T1 has not passed although the second antenna (for example, the antenna B 217 of FIG. 2A) and the third antenna (not shown) transmit threshold power up to the SAR threshold value available within the average time without backoff before the timer T2 has passed through the time interval T1, switching to the fourth antenna having the power priority may be performed.

For example, when the time interval T1 is longer than the timer T2, the electronic device 101 (for example, the processor 120) may return to the first antenna (for example, the antenna A 215 of FIG. 2A) at a time point at which the timer T2 expires that arrives earlier and transmit threshold power through the first antenna (for example, the antenna A 215 of FIG. 2A). For example, the electronic device 101 (for example, the processor 120) may transmit threshold power with the remaining SAR value for the remaining average time through the returned first antenna (for example, the antenna A 215 of FIG. 2A). For example, when the antennas having the lower priority have exhausted the SAR threshold value to transmit power but have not reached the timer interval T1, the electronic device 101 (for example, the processor 120) may return to the first antenna (for example, the antenna A 215 of FIG. 2A) and transmit threshold power up to the SAR threshold value, and then back off the threshold transmission power limit of the first antenna (for example, the antenna A 215 of FIG. 2A).

According to an embodiment of the disclosure, the electronic device 101 (for example, the processor 120) may control the operation of the interval in which switching between transmission antennas is repeatedly performed in a weak electric field interval in which threshold power should be continuously used. A method and an apparatus for the operation to use threshold power for a long time interval using the SAR margin of a plurality of antennas as a threshold value may be proposed according to an embodiment of the disclosure. The electronic device 101 (for example, the processor 120) according to an embodiment of the disclosure may determine a high-priority antenna in order to minimize switching while using the SAR margin of each antenna as the threshold value among the plurality of antennas. The electronic device 101 (for example, the processor 120) according to an embodiment of the disclosure may delete the backoff intervals of the remaining antennas except for the highest-priority antenna and control the switching time to the time interval T1, so as to increase the time during which threshold power or high power is maintained.

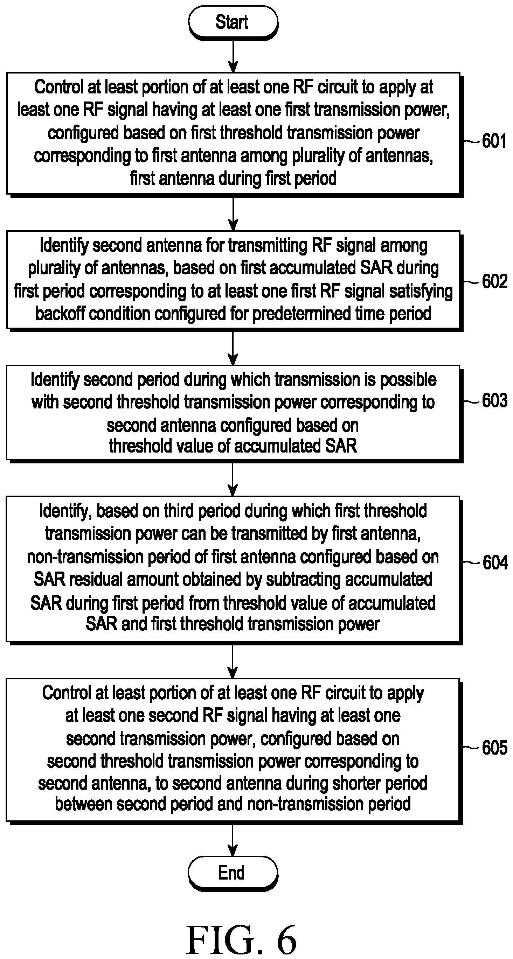

FIG. 6 is a flowchart illustrating an operation of the electronic device according to an embodiment of the disclosure.

The electronic device 101 (for example, the processor 120) according to an embodiment of the disclosure may control at least a portion of at least one RF circuit (for example, the RFIC and/or RFFE) (for example, the RF circuit 213 of FIG. 2A) to apply at least one first RF signal having at least one first transmission power configured based on first threshold transmission power corresponding to a first antenna (for example, the antenna A 215 of FIG. 2A) among a plurality of antennas to the first antenna for a first period in operation 601. For example, the first antenna (for example, the antenna A 215 of FIG. 2A) may be an antenna having a higher priority than other antennas by an operation of determining priorities of antennas. For example, the first threshold transmission power may be threshold power that can be transmitted through the first antenna (for example, the antenna A 215 of FIG. 2A). For example, the first period (for example, A s of FIGs. 4 and 5) may be a period for which the first threshold power can be transmitted before entry into the backoff interval of the first antenna (for example, the antenna A 215 of FIG. 2A) within the average time.

The electronic device 101 (for example, the processor 120) according to an embodiment of the disclosure may identify a second antenna (for example, the antenna B 217 of FIG. 2A) for transmitting an RF signal among a plurality of antennas, based on a first accumulated SAR for the first period corresponding to at least one RF signal satisfying a backoff condition configured for a predetermined time period in operation 602. For example, the predetermined time period is the average time and may be configured as, for example, 100 seconds. For example, when the first accumulated SAR satisfies the configured backoff condition, the first antenna (for example, the antenna A 215 of FIG. 2A) may transmit a signal with backoff power and identify the second antenna (for example, the antenna B 217 of FIG. 2A) without performing the backoff operation.

The electronic device 101 (for example, the processor 120) according to an embodiment of the disclosure may identify a second period (for example, T2 of FIGs. 4 and 5) for which transmission is possible with second threshold transmission power corresponding to the second antenna (for example, the antenna B 217 of FIG. 2A) configured based on a threshold value of the accumulated SAR in operation 603. For example, the second antenna (for example, the antenna B 217 of FIG. 2A) may be an antenna having a lower priority than the first antenna (for example, the antenna A 215 of FIG. 2A), based on an antenna priority determination reference. For example, the second period (for example, T2 of FIGs. 4 and 5) may be a sum of time during which a plurality of antennas having the low priority consume all SARs by using threshold power. For example, when the second period (for example, T2 of FIGs. 4 and 5) passes, the second antenna (for example, the antenna B 217 of FIG. 2A) may satisfy the configured backoff condition but may switch to another antenna that can use threshold power without backoff. For example, when there is no antenna having the priority lower than the second antenna (for example, the antenna B 217 of FIG. 2A), the electronic device 101 (for example, the processor 120) may switch from the second antenna (for example, the antenna B 217 of FIG. 2A) to the first antenna (for example, the antenna A 215 of FIG. 2A) to return to the first antenna (for example, the antenna A 215 of FIG. 2A).

The electronic device 101 (for example, the processor 120) according to an embodiment of the disclosure may identify a non-transmission period for which backoff of threshold transmission power, configured based on the SAR residual amount obtained by subtracting the accumulated SAR for the first period from the threshold value of the accumulated SAR and the first threshold transmission power, is not required in operation 604. For example, the electronic device 101 (for example, the processor 120) may calculate threshold transmission power, based on the SAR residual amount except for the SAR value of the first antenna (for example, the antenna A 215 of FIG. 2A) used for the first period. For example, the non-transmission period (for example, T1 of FIGs. 4 and 5) may be a period from a time point at which switching to the second antenna (for example, the antenna B 217 of FIG. 2A) is performed to the time at which returning to the first antenna (for example, the antenna A 215 of FIG. 2A) is performed. For example, the non-transmission period may have the meaning of a third period for which the first antenna can perform transmission with first threshold transmission power.

The electronic device 101 (for example, the processor 120) according to an embodiment of the disclosure may control at least a portion of at least one RF circuit to apply at least one second RF signal having at least one second transmission power, configured based on a second threshold transmission power level corresponding to the second antenna (for example, the antenna B 217 of FIG. 2A), to the second antenna (for example, the antenna B of FIG. 2A) for a shorter period between the second period (for example, T2 of FIGs. 4 and 5) or the non-transmission period (for example, T1 of FIGs. 4 and 5) in operation 605. For example, when the non-transmission period (for example, T2 of FIG. 4) is shorter than the second period (for example, T1 of FIG. 4), the electronic device 101 (for example, the processor 120) may return to the first antenna (for example, the antenna A 215 of FIG. 2A) at a time point at which the non-transmission period expires and may transmit threshold power at the SAR residual amount of the first antenna (for example, the antenna A 215 of FIG. 2A). For example, the electronic device 101 (for example, the processor 120) may transmit a signal with threshold power as long as the first antenna (for example, the antenna A 215 of FIG. 2A) complies with the SAR threshold value until the average time interval expires. At this time, since the electronic device 101 (for example, the processor 120) switches from the second antenna to the first antenna (for example, the antenna A 215 of FIG. 2A) at the time point at which the non-transmission period (for example, T2 of FIG. 4) expires, the second antenna may not transmit transmission power. In another example, when the second period (for example, T2 of FIG. 5) is shorter than the non-transmission period (for example, T1 of FIG. 5), the electronic device 101 (for example, the processor 120) may return again to the first antenna (for example, the antenna A 215 of FIG. 2A) from the second antenna (for example, the antenna B 217 of FIG. 2A) at the time point at which the second period (for example, T2 of FIG. 5) expires and transmit threshold power at the SAR residual amount of the first antenna (for example, the antenna A 215 of FIG. 2A). For example, the electronic device 101 (for example, the processor 120) may transmit a signal with threshold power as long as the first antenna (for example, the antenna A 215 of FIG. 2A) complies with the SAR threshold value until the average time interval expires. However, when the power usage of the first antenna (for example, the antenna A 215 of FIG. 2A) reaches the SAR threshold value before the average time interval expires, the threshold transmission power limit of the first antenna (for example, the antenna A 215 of FIG. 2A) may be backed off. At this time, since the electronic device 101 (for example, the processor 120) switches the second antenna (for example, the antenna B 217 of FIG. 2A) to the first antenna (for example, the antenna A 215 of FIG.

2A) at the time point at which the second period (for example, T2 of FIG. 5) expires, transmission power may be transmitted from the second antenna (for example, the antenna B 217 of FIG. 2A).

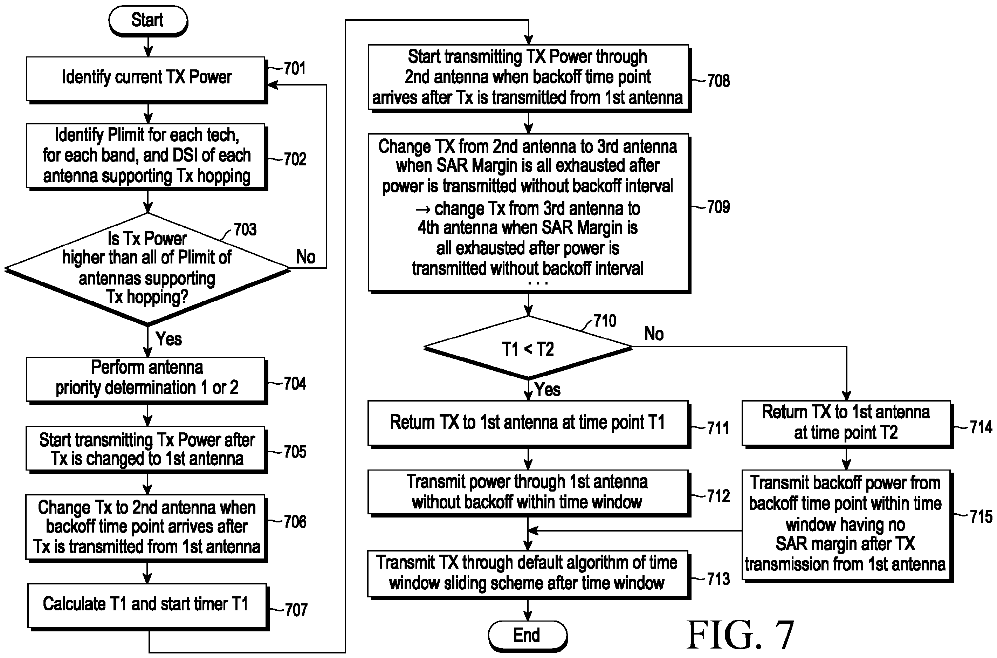

FIG. 7 is a flowchart illustrating an operation of the electronic device according to various embodiments of the disclosure.

Referring to FIG. 7, in operation 701, the electronic device 101 (for example, the processor 120) may perform an operation of identifying the current transmission power (tx power). The electronic device 101 (for example, the processor 120) according to an embodiment of the disclosure may perform an operation of identifying threshold transmission power (Plimit) according to each tech (for example, 4G, 5G, or the like) of each antenna supporting the hopping (tx hopping) operation of the transmission antenna, each band (for example, frequency band), and a device state index (DSI) in operation 702. The electronic device 101 (for example, the processor 120) according to an embodiment of the disclosure stores a threshold transmission power value according to each DSI based on the standard and uses the same for the SAR operation. For example, the electronic device 101 (for example, the processor 120) may configure threshold transmission power based on time averaged RF exposure according to each tech, each band, each antenna, and each DSI in order to meet the SAR standard. For example, the electronic device 101 (for example, the processor 120) may transmit instantaneous threshold power while complying with a regulation limit for average RF exposure in the average time determined through the configured SAR threshold value.

In connection with operations 701 and 702 of FIG. 7, the electronic device 101 (for example, the processor 120) may identify whether the threshold power should be continuously transmitted. For example, the electronic device 101 (for example, the processor 120) may identify a weak electric field area through RSRP measurement. For example, the electronic device 101 (for example, the processor 120) may identify whether power requested by the BS corresponds to the case where the threshold power is continuously requested. For example, the electronic device 101 (for example, the processor 120) may identify whether Plimit is low such as hot spot, gripping condition, or call transmission and reception. For example, in the situation where the threshold transmission power value is low, the SAR margin is fast consumed, and thus the antenna switching interval may be generated.

In operation 703 of FIG. 7, the electronic device 101 (for example, the processor 120) may identify whether the current transmission power is higher than Plimit of each antenna supporting antenna hopping.

In operation 703-NO of FIG. 7, when it is determined that Plimit is high enough to use the current transmission power, the electronic device 101 (for example, the processor 120) may continuously identify the current transmission power.

In operation 703-YES of FIG. 7, the electronic device 101 (for example, the processor 120) may identify that the current transmission power is higher than Plimit of each antenna. For example, when Plimit of each antenna is low and thus the current transmission power is used, the electronic device 101 (for example, the processor 120) may determine that a frequent antenna switching interval may be generated.

In operation 704 of FIG. 7, the electronic device 101 (for example, the processor 120) may determine priorities of a plurality of antennas. For example, in the antenna priority, an antenna that can use threshold transmission power for a long time, based on Plimit according to the DSI and the SAR residual amount of each antenna may have a high priority. In another example, the antenna priority may be determined based on the TRP (total radiated power) performance of the transmission antenna. For example, [Table 1] below is a table for each antenna with respect to a threshold transmission power value configured according to a device state index (DSI).

[Table 1]

| | | 0 | 1 | 2 | 3 | 4 | 7 |
|---|---|---|---|---|---|---|---|
| | DSI | FREE | GRIP | RECEIVER | HOTSPOT | EARJACK | CAM |
| Tech Band | Antenna | Plimit (dBm) | Plimit (dBm) | Plimit (dBm) | Plimit (dBm) | Plimit (dBm) | Plimit (dBm) |
| NR5G_N77 | 7 | 19 | 19 | 18 | 19 | 19 | 18 |
| NR5G_N77 | 2 | 26 | 20.5 | 32.4 | 17.5 | 20.5 | 32.4 |
| NR5G_N77 | 10 | 27 | 27 | 27 | 22 | 27 | 27 |
| NR5G_N77 | 3 | 19 | 19 | 18 | 19 | 19 | 18 |

According to an embodiment of the disclosure, the electronic device 101 (for example, the processor 120) may select an antenna that can transmit threshold power for a long time to have a high priority in the antenna priority. In other words, the electronic device 101 (for example, the processor 120) may determine an antenna that can transmit threshold power with at the SAR residual amount within the average time and the threshold transmission power value (Plimit) for a long time to have a high priority. For example, the electronic device 101 (for example, the processor 120) may determine that the first-priority antenna (for example, the first antenna of FIGs. 4 to 6) is an antenna having the highest Plimit in spite of the SAR residual amount is insufficient. For example, the electronic device 101 (for example, the processor 120) may select the first-priority antenna as an antenna that can use threshold power for a long time after the average time from among the plurality of antennas. For example, in the antenna priority, a higher priority can use threshold power at the SAR residual amount with the average time and Plimit for a longer time, and when the remaining amounts of SAR are the same, the electronic device 101 (for example, the processor 120) may determine that higher Plimit has a higher priority.

According to an embodiment of the disclosure, a method of calculating the time during which the threshold power can be used for a long time at the SAR residual amount within the average time of each antenna may be described with reference to [Table 1]. For example, in DSI 3 of [Table 1], the case where a priority of antenna N77 is determined may be referred to. For example, the amount of SAR of each antenna that can be used for the average time may be the SAR threshold value, the SAR threshold value that can be used for the average time (for example, a time window of about 100 s) may be about 100 mW/g, and when the measurement period (P) is about 1 s, the SAR consumption may be 1mW/g *P when Plimit is used. For example, the SAR residual amount may be obtained by subtracting the SAR used up to now from the SAR threshold value that can be used for the average time. Accordingly, in the case of antenna 7 in [Table 1], threshold power is about 22 dBm and Plimit is about 19 dBM, and thus the SAR consumption of antenna 7 may be about 2 mW/g * sec. Further, the SAR residual amount of antenna 7 may be about 100 mW/g - SAR used up to now (about 2 mW/g*P(10 s)). Accordingly, the SAR residual amount within the average time of antenna 7 may be about 80 mW/g. Similarly, referring to [Table 1], the SAR residual amount within the average time of antenna 2 may be calculated as about 50 mW/g, the SAR residual amount within the average time of antenna 10 may be calculated as about 30 mW/g, and the SAR residual amount within the average time of antenna 3 may be calculated as about 50 mW/g. The electronic device according to an embodiment of the disclosure may calculate the time during which threshold transmission power can be used at the SAR residual amount. For example, in the case of antenna 7, when about 80 mW/g corresponding to the SAR residual amount is divided by about 2 mW/g*sec, it may be calculated that threshold power can be used for about 40 seconds. Similarly, it may be calculated that antenna 2 can use threshold power for about 21 seconds and antenna 3 can use threshold power for 25 seconds. Accordingly, in the antenna priority, a first priority may be antenna 10 corresponding to an antenna having the highest Plimit, a second priority may be antenna 7 that can use threshold power for the longest time, a third priority may be antenna 3 that can use threshold power for the next longest time, and a fourth priority may be determined as antenna 2. As described above, since threshold transmission power is used in the order of antennas that can use threshold power for a long time through the antenna priority determination, it is possible to decrease the number of antenna hopping and increase stability of the connection with the BS.

The electronic device 101 (for example, the processor 120) according to an embodiment of the disclosure may determine the antenna priority, based on the TRP performance of each antenna. For example, the electronic device 101 (for example, the processor 120) may determine that a higher value of the TRP performance identified during a development stage is a higher priority. For example, when the antenna priority is determined based on the TRP performance, antennas having the high antenna performance are determined to have the high priority and may transmit threshold power to the BS, thereby increasing transmission performance.

Referring to FIG. 7, when determining a first-priority antenna, based on the priority determined according to operation 704, the electronic device 101 (for example, the processor 120) according to an embodiment of the disclosure may determine the first-priority as a transmission antenna and start transmitting threshold power in operation 705.

Referring to FIG. 7, in operation 706, the electronic device 101 (for example, the processor 120) according to an embodiment of the disclosure may switch the first-priority antenna to a second-priority antenna when a power backoff time point arrives. For example, the electronic device 101 (for example, the processor 120) may switch to the second-priority antenna without backoff even through the power backoff time point of the first-priority antenna arrives.

Referring to FIG. 7, in operation 707, the electronic device 101 (for example, the processor 120) according to an embodiment of the disclosure may calculate the time interval T1 when the backoff time point of the first-priority antenna arrives. For example, the time interval T1 may be calculated from the backoff time point of the first-priority antenna to a time point of an interval in which threshold power can be used at the SAR residual amount within the average time when switching to the first-priority antenna is performed. Further, the electronic device 101 (for example, the processor 120) according to an embodiment of the disclosure may start a time T2 at the backoff time point of the first-priority antenna. The time interval T2 may be calculated through the following operation.

Referring to FIG. 7, in operation 708, the electronic device 101 (for example, the processor 120) according to an embodiment of the disclosure may determine the second-priority antenna as a transmission antenna and start transmitting threshold power when the backoff time interval arrives after transmission power of the first-priority antenna is transmitted.

In operation 709 of FIG. 7, the electronic device 101 (for example, the processor 120) including two or more antennas according to an embodiment of the disclosure may transmit threshold power up to an SAR threshold value available within the average time through the second-priority antenna without backoff and switch the second-priority antenna to a third-priority antenna. For example, the second-priority antenna does not calculate the power backoff SAR usage and may transmit a signal with threshold power up to the SAR threshold value available within the average time without backoff. For example, the third-priority antenna switched from the second-priority antenna may transmit threshold power up to the SAR threshold value available within the average time without backoff and switch to a fourth-priority antenna corresponding to a lower priority. As described above, the electronic device 101 (for example, the processor 120) according to an embodiment of the disclosure may transmit threshold power up to the SAR threshold value through all of the included lower-priority antennas. At this time, a threshold time of T2 may be a sum of time during which the lower-priority antennas such as the second-priority to fourth-priority antennas exhaust the entire SAR with the threshold power without backoff.

Referring to FIG. 7, in operation 710, the electronic device 101 (for example, the processor 120) according to an embodiment of the disclosure may compare duration between the time interval T1 and a time interval of the timer T2. For example, the electronic device 101 (for example, the processor 120) according to an embodiment of the disclosure may identify whether the above operations are performed within the time interval T1.

Referring to FIG. 7, in operation 710-YES, the electronic device 101 (for example, the processor 120) according to an embodiment of the disclosure may identify that the duration of the time interval T1 is shorter than the duration of T2.

Referring to FIG. 7, when the lower-priority antennas reach the time interval T1 while transmitting threshold power up to the SAR threshold value, the electronic device 101 (for example, the processor 120) according to an embodiment of the disclosure may determine the first-priority antenna as the transmission antenna at the time point at which the time interval T1 passes in operation 711.

Referring to FIG. 7, in operation 712, the electronic device 101 (for example, the processor 120) according to an embodiment of the disclosure may transmit power without backoff within the average time through the first-priority antenna.

Referring to FIG. 7, in operation 710-NO, the electronic device 101 (for example, the processor 120) according to an embodiment of the disclosure may identify that the duration of the time interval T1 is longer than the duration of T2. For example, the electronic device 101 (for example, the processor 120) according to an embodiment of the disclosure may exhaust all of the SAR margin by transmitting threshold power up to the SAR threshold value through the lower-priority antennas before the time interval T1 passes.

Referring to FIG. 7, when the first-priority antenna is able to maintain the threshold power with the remaining SAR margin until the average time in the time interval T2, the electronic device 101 (for example, the processor 120) according to an embodiment of the disclosure may return to the first-priority antenna in operation 714. For example, in operation 715, the electronic device 101 (for example, the processor 120) according to an embodiment of the disclosure may transmit the threshold power through the first-priority antenna after the lower-priority antenna switches to the first-priority antenna, and may transmit backed off power when the SAR residual amount is insufficient.

Referring to FIG. 7, in operation 713, transmission power may be transmitted through an algorithm in a time window sliding scheme after the average time corresponding to a predetermined time interval according to an embodiment of the disclosure.

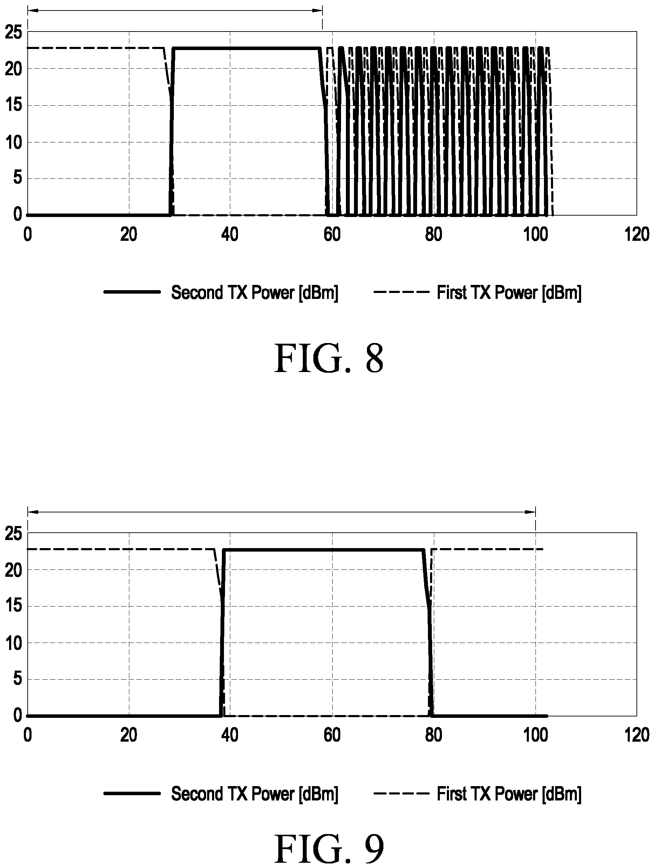

FIG. 8 illustrates frequent switching between antennas according to a comparative embodiment. FIG. 9 illustrates transmission power for each time based on an antenna switching operation according to an embodiment of the disclosure.

Referring to FIG. 8, when the electronic device 101 (for example, the processor 120) according to an embodiment of the disclosure includes a plurality of antennas, the case where frequent switching between antennas is generated may be identified by a dBm (y axis) value according to a time (x axis). Referring to FIG. 8, it may be identified that the switching operation is generated between a first antenna (for example, the dotted line of FIG. 8) and a second antenna (for example, the solid line of FIG. 8) around about 60 s. It may be identified that threshold power, backoff power, and power of a hysteresis interval at a time point at which backoff power is changed to threshold power are mixed and transmitted in a range of approximately 15 to 22 dBm in an interval during which the frequent switching is generated.

According to an embodiment of the disclosure, the electronic device 101 (for example, the processor 120) may check transmission power (dBm) according to time (s) in antenna hopping during the time average SAR operation and identify effects according to the operation of the disclosure. For example, referring to FIG. 9, power transmission of the first antenna (for example, the first antenna of FIGs. 4 to 6) may be marked by the dotted line (for example, 1 TX Power of FIG. 9) and power transmission of the second antenna (for example, the second antenna of FIGs. 4 to 6) may be marked by the solid line (for example, 2 TX Power of FIG. 9). Referring to FIG. 9, the electronic device 101 (for example, the processor 120) may identify that the first antenna (for example, the first antenna of FIG. 9) having high threshold transmission power (Plimit) transmits power of about 22.5 dBm from O s to about 38 s according to the antenna priority. For example, when it is assumed that T1 (for example, T1 of FIG. 4) calculated by the electronic device 101 (for example, the processor 120) is shorter than T2 (for example, T2 of FIG. 4), the first antenna (for example, the first antenna of FIGs. 4 to 6) may switch to the second antenna (for example, the second antenna of FIGs. 4 to 6) having the next priority to transmit threshold power, when the time point T1 arrives, the antenna may return to the first antenna (for example, the first antenna of FIGs. 4 to 6) again to perform all transmission with threshold power up to the SAR threshold value. Accordingly, referring to FIG. 9, it is identified that the first antenna (for example, the first antenna of FIGs. 4 to 6) and the second antenna (for example, the second antenna of FIGs. 4 to 6) may continuously maintain threshold power with about 22.5 dBm until about 100 s without any frequent switching interval. As a result, it is possible to minimize the frequent switching interval in which an error may occur with the use of SAR threshold values of two antennas and increase the maintenance time of threshold power. According to the disclosure, the electronic device including the plurality of antennas may reduce data loss in uplink channels by minimizing switching between antennas and increase uplink throughput.

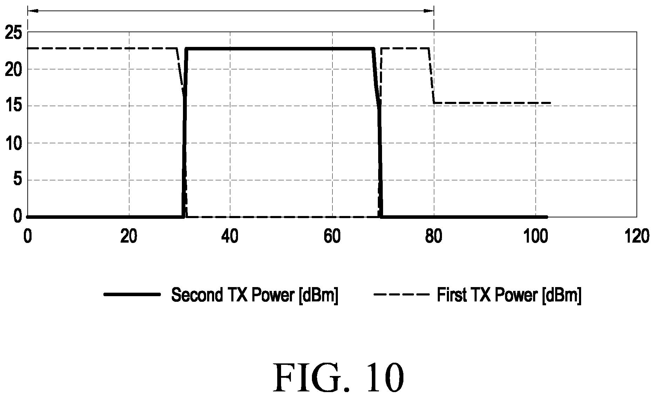

FIG. 10 illustrates transmission power for each time based on the antenna switching operation according to another embodiment of the disclosure.

According to an embodiment of the disclosure, transmission power of the electronic device 101 (for example, the processor 120) in hopping between the first antenna and the second antenna when T1 (for example, T1 of FIG. 5) is larger than T2 (for example, T2 of FIG. 5) is illustrated. For example, an antenna having higher Plimit is determined as the first antenna (for example, the first antenna of FIGs. 4 to 6) according to the antenna priority and may switch to the second antenna (for example, the second antenna of FIGs. 4 to 6). The electronic device 101 (for example, the processor 120) may use threshold power for the second antenna (for example, the second antenna of FIGs. 4 to 6) and switch back to the first antenna (for example, the first antenna of FIGs. 4 to 6), and thus movement to the first antenna (for example, the first antenna of FIGs. 4 to 6) may be performed after threshold power is used for a longer time than the conventional scheme. For example, since T1 (for example, T1 of FIG. 5) is longer than T2, movement to the first antenna (for example, the first antenna of FIGs. 4 to 6) may be performed after all the available SAR threshold value is used for the average time of the second antenna (for example, the second antenna of FIGs. 4 to 6). Backed off power may be transmitted in the backoff interval to meet the SAR standard after threshold transmission power is transmitted from the first antenna (for example, the first antenna of FIGs. 4 to 6) after the switching operation of returning to the first antenna (for example, the first antenna of FIGs. 4 to 6). As a result, it is possible to minimize the switching interval in which an error may occur and increase the maintenance time using threshold power while maximally using the SAR threshold values of the two antennas.

An electronic device may include at least one processor 211 of FIG. 2, at least one RF circuit 213 of FIG. 2 connected to the at least one processor, and a plurality of antennas 215 and 217 of FIG. 2 connected to the at least one RF circuit.

The at least one processor 211 of FIG. 2 of the disclosure may be configured to control at least a portion of the at least one RF circuit to apply at least one RF signal having at least one first transmission power, configured based on first threshold transmission power corresponding to a first antenna 215 of FIG. 2 among the plurality of antennas, to the first antenna 215 of FIG. 2 during a first period.

The at least one processor 211 of FIG. 2 of the disclosure may be configured to identify a second antenna 217 of FIG. 2 for transmitting an RF signal among the plurality of antennas, based on a first accumulated SAR during the first period corresponding to the at least one first RF signal satisfying a backoff condition configured for a predetermined time period. Even though the backoff condition is satisfied, backoff of threshold transmission power corresponding to the first antenna 215 of FIG. 2 may not be performed.

The at least one processor 211 of FIG. 2 of the disclosure may be configured to identify a second period during which transmission is possible with second threshold transmission power corresponding to the second antenna 217 of FIG. 2 configured based on a threshold value of an accumulated SAR.

The at least one processor 211 of FIG. 2 of the disclosure may be configured to identify a non-transmission period which is configured based on an SAR residual amount obtained by subtracting the accumulated SAR during the first period from the threshold value of the accumulated SAR and the first threshold transmission power and in which backoff of threshold transmission power is not required.

The at least one processor 211 of FIG. 2 of the disclosure may be configured to control at least a portion of the at least one RF circuit to apply at least one second RF signal having at least one second transmission power, configured based on second threshold transmission power corresponding to the second antenna 217 of FIG. 2, to the second antenna 217 of FIG. 2 during a shorter period between the second period and the non-transmission period.

The at least one processor 211 of FIG. 2 of the disclosure may be configured to determine the first antenna 215 of FIG. 2 and the second antenna 217 of FIG. 2, based on an antenna priority, the antenna priority may be determined according to a time during which a signal can be transmitted with the threshold transmission power for each antenna and TRP performance determined for each antenna, and a priority of the first antenna 215 of FIG. 2 may be higher than a priority of the second antenna 217 of FIG. 2.

The at least one processor 211 of FIG. 2 of the disclosure may be configured to, when the non-transmission period is shorter than the second period, switch to the first antenna 215 of FIG. 2 after the non-transmission period ends and transmit the at least one first RF signal with the first transmission power through the first antenna 215 of FIG. 2 until the predetermined period.

The at least one processor 211 of FIG. 2 of the disclosure may be configured to, when the second period is shorter than the non-transmission period, switch to the first antenna 215 of FIG. 2 after the second period ends.

The at least one processor 211 of FIG. 2 of the disclosure may be configured to transmit the at least one first RF signal with the first transmission power through the first antenna using the SAR residual amount.

The at least one processor 211 of FIG. 2 of the disclosure may be configured to perform backoff when the backoff condition is satisfied.

The at least one processor 211 of FIG. 2 of the disclosure may be configured to calculate the time during which the signal can be transmitted with the threshold transmission power for each antenna, based on the SAR residual amount.

The at least one processor 211 of FIG. 2 of the disclosure may be configured to determine a priority such that higher threshold transmission power has a higher priority when SAR residual amounts are equal.

The at least one processor 211 of FIG. 2 of the disclosure may be configured to, when the electronic device 101 of FIG. 1 further includes a plurality of antennas having a lower priority than the second antenna 217 of FIG. 2, calculate the second period to include a period during which all of the plurality of antennas having the lower priority use threshold transmission power.

In the disclosure, the non-transmission period may be calculated from a time point at which a backoff condition of the first antenna 215 of FIG. 2 is satisfied to a start time point of an interval in which a signal can be transmitted with the first threshold transmission power calculated based on the SAR residual amount of the first antenna 215 of FIG. 2.

The at least one processor 211 of FIG. 2 of the disclosure may be configured to apply the backoff condition to the first antenna through a time window sliding scheme when the predetermined time period passes.

The at least one processor 211 of FIG. 2 of the disclosure may be configured to configure an antenna having a highest priority among the plurality of antennas as the first antenna 215 of FIG. 2.

The at least one processor 211 of FIG. 2 of the disclosure may be configured to identify whether the first RF signal should be transmitted with the first transmission power through the first antenna 215 of FIG. 2.

The at least one processor 211 of FIG. 2 of the disclosure may be further configured to identify whether the first threshold transmission power of the first antenna 215 of FIG. 2 is higher than power requested by a base station.

A method of an electronic device 101 of FIG. 1 according to an embodiment of the disclosure may include an operation of controlling at least a portion of at least one RF circuit 213 of FIG. 2 to apply at least one first RF signal having at least one first transmission power, configured based on first threshold transmission power corresponding to a first antenna 215 of FIG. 2 among a plurality of antennas included in the electronic device 101 of FIG. 1, to the first antenna 215 of FIG. 2 during a first period.

The method of the electronic device 101 of FIG. 1 according to an embodiment of the disclosure may include an operation of identifying a second antenna 217 of FIG. 2 for transmitting an RF signal among the plurality of antennas, based on a first accumulated SAR during the first period corresponding to the at least one first RF signal satisfying a backoff condition configured for a predetermined time period. Even though the backoff condition is satisfied, backoff of threshold transmission power corresponding to the first antenna 215 of FIG. 2 may not be performed.

The method of the electronic device 101 of FIG. 1 according to an embodiment of the disclosure may include an operation of identifying a second period during which transmission is possible with second threshold transmission power corresponding to the second antenna 217 of FIG. 2 configured based on a threshold value of an accumulated SAR.

The method of the electronic device 101 of FIG. 1 according to an embodiment of the disclosure may include an operation of identifying a non-transmission period which is configured based on an SAR residual amount obtained by subtracting the accumulated SAR during the first period from the threshold value of the accumulated SAR and the first threshold transmission power and in which backoff of threshold transmission power is not required.

The method of the electronic device 101 of FIG. 1 according to an embodiment of the disclosure may include an operation of controlling at least a portion of the at least one RF circuit 213 of FIG. 2 to apply at least one second RF signal having at least one second transmission power, configured based on second threshold transmission power corresponding to the second antenna 217 of FIG. 2, to the second antenna 217 of FIG. 2 during a shorter period between the second period and the non-transmission period.

In the method of the electronic device 101 of FIG. 1 according to an embodiment of the disclosure, the first antenna 215 of FIG. 2 and the second antenna 217 of FIG. 2 may be determined based on an antenna priority. In the method of the electronic device according to an embodiment of the disclosure, the antenna priority may be determined according to a time during which a signal can be transmitted with the threshold transmission power for each antenna and TRP performance determined for each antenna.

In the method of the electronic device 101 of FIG. 1 according to an embodiment of the disclosure, a priority of the first antenna 215 of FIG. 2 may be higher than a priority of the second antenna 217 of FIG. 2.

The method of the electronic device 101 of FIG. 1 according to an embodiment of the disclosure may include an operation of switching to the first antenna 215 of FIG. 2 after the non-transmission period ends when the non-transmission period is shorter than the second period.

The method of the electronic device 101 of FIG. 1 according to an embodiment of the disclosure may include an operation of transmitting the at least one first RF signal with the first transmission power through the first antenna 215 of FIG. 2 until the predetermined period.

The method of the electronic device 101 of FIG. 1 according to an embodiment of the disclosure may include an operation of switching to the first antenna 215 of FIG. 2 after the second period ends when that the second period is shorter than the non-transmission period.

The method of the electronic device 101 of FIG. 1 according to an embodiment of the disclosure may include an operation of transmitting the at least one first RF signal with the first transmission power through the first antenna 215 of FIG. 2 using the SAR residual amount.

The method of the electronic device 101 of FIG. 1 according to an embodiment of the disclosure may include an operation of performing backoff when the first antenna 215 of FIG. 2 satisfies the backoff condition.

The method of the electronic device 101 of FIG. 1 according to an embodiment of the disclosure may include an operation of calculating the time during which the signal can be transmitted with the threshold transmission power for each antenna, based on the SAR residual amount.

The method of the electronic device 101 of FIG. 1 according to an embodiment of the disclosure may include an operation of determining such that higher threshold transmission power has a higher priority when that SAR residual amounts are equal.

The method of the electronic device 101 of FIG. 1 according to an embodiment of the disclosure may include an operation of, when the electronic device 101 of FIG. 1 further includes a plurality of antennas having a lower priority than the second antenna 217 of FIG. 2, calculating the second period to include a period during which all of the plurality of antennas having the lower priority use threshold transmission power.

The method of the electronic device 101 of FIG. 1 according to an embodiment of the disclosure may include an operation of configuring the non-transmission period as a period from a time point at which a backoff condition of the first antenna 215 of FIG. 2 is satisfied to a start time point of an interval in which a signal can be transmitted with the first threshold transmission power calculated based on the SAR residual amount of the first antenna 215 of FIG. 2.

The method of the electronic device 101 of FIG. 1 according to an embodiment of the disclosure may include an operation of applying the backoff condition to the first antenna through a time window sliding scheme when the predetermined time period passes.

The method of the electronic device 101 of FIG. 1 according to an embodiment of the disclosure may include an operation of selecting an antenna having a highest priority among the plurality of antennas as the first antenna 215 of FIG. 2.

The method of the electronic device 101 of FIG. 1 according to an embodiment of the disclosure may include an operation of identifying whether the first RF signal should be transmitted with the first transmission power through the first antenna 215 of FIG. 2.

The method of the electronic device 101 of FIG. 1 according to an embodiment of the disclosure may include an operation of identifying whether the first threshold transmission power of the first antenna 215 of FIG. 2 is higher than power requested by a base station.

A non-transitory computer-readable storage medium storing one or more programs according to an embodiment of the disclosure may include instructions that perform operations according to an embodiment when executed by a processor of an electronic device. The one or more programs according to an embodiment may include instructions that performs an operation of controlling at least a portion of at least one RF circuit to apply at least one RF signal having at least one first transmission power, configured based on first threshold transmission power corresponding to a first antenna 215 of FIG. 2 among a plurality of antennas, to the first antenna 215 of FIG. 2 during a first period.

The one or more programs according to an embodiment may include instructions that performs an operation of identifying a second antenna 217 of FIG. 2 for transmitting an RF signal among the plurality of antennas, based on a first accumulated SAR during the first period corresponding to the at least one first RF signal satisfying a backoff condition configured for a predetermined time period. Instructions that perform an operation of not performing backoff of threshold transmission power corresponding to the first antenna 215 of FIG. 2 even though the backoff condition is satisfied may be included.

The one or more programs according to an embodiment may include instructions that performs an operation of identifying a second period during which transmission is possible with second threshold transmission power corresponding to the second antenna configured based on a threshold value of an accumulated SAR.

The one or more programs according to an embodiment may include instructions that performs an operation of identifying a non-transmission period which is configured based on an SAR residual amount obtained by subtracting the accumulated SAR during the first period from the threshold value of the accumulated SAR and the first threshold transmission power and in which backoff of threshold transmission power is not required.

The one or more programs according to an embodiment may include instructions that performs an operation of controlling at least a portion of the at least one RF circuit to apply at least one second RF signal having at least one second transmission power, configured based on second threshold transmission power corresponding to the second antenna, to the second antenna (217 of FIG. 2) during a shorter period between the second period and the non-transmission period.

## Claims

1. An electronic device comprising:

at least one processor (211 of FIG. 2);
at least one RF circuit (213 of FIG. 2) connected to the at least one processor; and
a plurality of antennas (215 and 217 of FIG. 2) connected to the at least one RF circuit,
wherein the at least one processor is configured to:

control at least a portion of the at least one RF circuit to apply at least one RF signal having at least one first transmission power, configured based on first threshold transmission power corresponding to a first antenna (215 of FIG. 2) among the plurality of antennas, to the first antenna (215 of FIG. 2) during a first period;
identify a second antenna (217 of FIG. 2) for transmitting an RF signal among the plurality of antennas, based on a first accumulated SAR during the first period corresponding to the at least one first RF signal satisfying a backoff condition configured for a predetermined time period;
identify a second period during which transmission is possible with second threshold transmission power corresponding to the second antenna (217 of FIG. 2) configured based on a threshold value of an accumulated SAR;
identify, based on a third period during which the first threshold transmission power can be transmitted by the first antenna, a non-transmission period of the first antenna configured based on an SAR residual amount obtained by subtracting the accumulated SAR during the first period from the threshold value of the accumulated SAR and the first threshold transmission power; and
control at least a portion of the at least one RF circuit to apply at least one second RF signal having at least one second transmission power, configured based on second threshold transmission power corresponding to the second antenna (217 of FIG. 2), to the second antenna (217 of FIG. 2) during a shorter period between the second period and the non-transmission period.

2. The electronic device of claim 1, wherein the first antenna (215 of FIG. 2) and the second antenna (217 of FIG. 2) are determined based on an antenna priority, and
wherein the antenna priority is determined according to a time during which a signal can be transmitted with the threshold transmission power for each antenna and TRP performance determined for each antenna, and a priority of the first antenna (215 of FIG. 2) is higher than a priority of the second antenna (217 of FIG. 2).

3. The electronic device of claim 1 or 2, wherein, in case that the non-transmission period is shorter than the second period, switching to the first antenna (215 of FIG. 2) is performed after the non-transmission period ends, and the at least one first RF signal is transmitted with the first transmission power through the first antenna (215 of FIG. 2) until the predetermined period.

4. The electronic device of one of claims 1 to 3, wherein, in case that the second period is shorter than the non-transmission period, switching to the first antenna (215 of FIG. 2) is performed after the second period ends, the at least one first RF signal is transmitted with the first transmission power through the first antenna (215 of FIG. 2) using the SAR residual amount, and in case that the backoff condition is satisfied, backoff is performed.

5. The electronic device of one of claims 1 to 4, wherein the time during which the signal can be transmitted with the threshold transmission power for each antenna is calculated based on the SAR residual amount, and
wherein, in case that SAR residual amounts are equal, a priority is determined such that higher threshold transmission power has a higher priority.

6. The electronic device of one of claims 1 to 5, wherein, in case that the electronic device further comprises a plurality of antennas having a lower priority than the second antenna (217 of FIG. 2), the second period is calculated to include a period during which all of the plurality of antennas having the lower priority use threshold transmission power.

7. The electronic device of one of claims 1 to 6, wherein the non-transmission period is configured from a time point at which a backoff condition of the first antenna (215 of FIG. 2) is satisfied to a start time point of an interval in which a signal can be transmitted with the first threshold transmission power calculated based on the SAR residual amount of the first antenna (215 of FIG. 2).

8. The electronic device of one of claims 1 to 7, wherein, in case that the predetermined time period passes, the backoff condition is applied to the first antenna through a time window sliding scheme.

9. The electronic device of one of claims 1 to 8, wherein the electronic device is further configured to:

determine an antenna having a highest priority among the plurality of antennas as the first antenna (215 of FIG. 2);
identify whether the first RF signal should be transmitted with the first transmission power through the first antenna (215 of FIG. 2); and
identify whether the first threshold transmission power of the first antenna (215 of FIG. 2) is higher than power requested by a base station.

10. A method of an electronic device, the method comprising:

controlling at least a portion of at least one RF circuit to apply at least one RF signal having at least one first transmission power, configured based on first threshold transmission power corresponding to a first antenna (215 of FIG. 2) among a plurality of antennas, to the first antenna (215 of FIG. 2) during a first period;
identifying a second antenna (217 of FIG. 2) for transmitting an RF signal among the plurality of antennas, based on a first accumulated SAR during the first period corresponding to the at least one first RF signal satisfying a backoff condition configured for a predetermined time period;
identifying a second period during which transmission is possible with second threshold transmission power corresponding to the second antenna (217 of FIG. 2) configured based on a threshold value of an accumulated SAR;
identifying, based on a third period during which transmission is possible with the first threshold transmission power through the first antenna, a non-transmission period of the first antenna configured based on an SAR residual amount obtained by subtracting the accumulated SAR during the first period from the threshold value of the accumulated SAR and the first threshold transmission power; and
controlling at least a portion of the at least one RF circuit to apply at least one second RF signal having at least one second transmission power, configured based on second threshold transmission power corresponding to the second antenna (217 of FIG. 2), to the second antenna (217 of FIG. 2) during a shorter period between the second period and the non-transmission period.

11. The method of claim 10, wherein the first antenna (215 of FIG. 2) and the second antenna (217 of FIG. 2) are determined based on an antenna priority,

wherein the antenna priority is determined according to a time during which a signal can be transmitted with the threshold transmission power for each antenna and TRP performance determined for each antenna, and
wherein a priority of the first antenna (215 of FIG. 2) is higher than a priority of the second antenna (217 of FIG. 2).

12. The method of claim 10 or 11, comprising, in case that the non-transmission period is shorter than the second period:

switching to the first antenna (215 of FIG. 2) after the non-transmission period ends; and
transmitting the at least one first RF signal with the first transmission power through the first antenna (215 of FIG. 2) until the predetermined period.

13. The method of one of claims 10 to 12, comprising, in case that the second period is shorter than the non-transmission period:

switching to the first antenna (215 of FIG. 2) after the second period ends;
transmitting the at least one first RF signal with the first transmission power through the first antenna (215 of FIG. 2) using the SAR residual amount; and
in case that the backoff condition is satisfied, performing backoff.

14. The method of one of claims 10 to 13, wherein the first antenna (215 of FIG. 2) and the second antenna (217 of FIG. 2) are determined based on an antenna priority, and
wherein the time during which the signal can be transmitted with the threshold transmission power for each antenna is calculated based on the SAR residual amount, and, in case that SAR residual amounts are equal, the antenna priority is determined such that higher threshold transmission power has a higher priority.

15. The method of one of claims 10 to 14, wherein, in case that the electronic device further comprises a plurality of antennas having a lower priority than the second antenna (217 of FIG. 2), the second period is calculated to include a period during which all of the plurality of antennas having the lower priority use threshold transmission power.

FIG. 1

EP 4 521 649 A1

FIG. 2A

FIG. 2B

EP 4 521 649 A1

FIG. 3

EP 4 521 649 A1

FIG. 4

EP 4 521 649 A1

FIG. 5

EP 4 521 649 A1

Start

Control at least portion of at least one RF circuit to apply at least one RF signal having at least one first transmission power, configured based on first threshold transmission power corresponding to first antenna among plurality of antennas, first antenna during first period ~601

Identify second antenna for transmitting RF signal among plurality of antennas, based on first accumulated SAR during first period corresponding to at least one first RF signal satisfying backoff condition configured for predetermined time period ~602

Identify second period during which transmission is possible with second threshold transmission power corresponding to second antenna configured based on threshold value of accumulated SAR ~603

Identify, based on third period during which first threshold transmission power can be transmitted by first antenna, non-transmission period of first antenna configured based on SAR residual amount obtained by subtracting accumulated SAR during first period from threshold value of accumulated SAR and first threshold transmission power ~604

Control at least portion of at least one RF circuit to apply at least one second RF signal having at least one second transmission power, configured based on second threshold transmission power corresponding to second antenna, to second antenna during shorter period between second period and non-transmission period ~605

End

FIG. 6

Start

Identify current TX Power ~701

Identify Plimit for each tech, for each band, and DSI of each antenna supporting Tx hopping ~702

Is Tx Power higher than all of Plimit of antennas supporting Tx hopping? ~703

No

Yes

Perform antenna priority determination 1 or 2 ~704

Start transmitting Tx Power after Tx is changed to 1st antenna ~705

Change Tx to 2nd antenna when backoff time point arrives after Tx is transmitted from 1st antenna ~706

Calculate T1 and start timer T1 ~707

Start transmitting TX Power through 2nd antenna when backoff time point arrives after Tx is transmitted from 1st antenna ~708

Change TX from 2nd antenna to 3rd antenna when SAR Margin is all exhausted after power is transmitted without backoff interval → change Tx from 3rd antenna to 4th antenna when SAR Margin is all exhausted after power is transmitted without backoff interval ... ~709

T1 < T2 ~710

No

Yes

Return TX to 1st antenna at time point T1 ~711

Return TX to 1st antenna at time point T2 ~714

Transmit power through 1st antenna without backoff within time window ~712

Transmit backoff power from backoff time point within time window having no SAR margin after TX transmission from 1st antenna ~715

Transmit TX through default algorithm of time window sliding scheme after time window ~713

End

FIG. 7

EP 4 521 649 A1

30

FIG. 8

FIG. 9

FIG. 10

## INTERNATIONAL SEARCH REPORT

| International application No. |
| --- |
| **PCT/KR2023/009256** |

**A.     CLASSIFICATION OF SUBJECT MATTER**

**H04B 1/3827**(2015.01)i; **H04W 52/18**(2009.01)i; **H04W 52/30**(2009.01)i; **H04B 7/06**(2006.01)i

According to International Patent Classification (IPC) or to both national classification and IPC

**B.     FIELDS SEARCHED**

Minimum documentation searched (classification system followed by classification symbols)

H04B 1/3827(2015.01); H04B 1/401(2015.01); H04W 24/02(2009.01); H04W 52/26(2009.01); H04W 52/34(2009.01); H04W 52/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SAR(specific absorption rate), 안테나(antenna), 송신 전력(transmit power), 백오프 (backoff), 임계값(threshold value)

**C.     DOCUMENTS CONSIDERED TO BE RELEVANT**

| Category* | Citation of document, with indication, where appropriate, of the relevant passages | Relevant to claim No. |
| --- | --- | --- |
| A | US 2019-0356349 A1 (HUAWEI TECHNOLOGIES CO., LTD.) 21 November 2019 (2019-11-21) See claim 15. | 1-15 |
| A | US 2016-0174168 A1 (QUALCOMM INCORPORATED) 16 June 2016 (2016-06-16) See claims 1, 5 and 7. | 1-15 |
| A | KR 10-1638709 B1 (GOOGLE TECHNOLOGY HOLDINGS LLC) 11 July 2016 (2016-07-11) See paragraphs [0138]-[0140]; claim 1; and figure 13. | 1-15 |
| A | KR 10-2017-0101710 A (SAMSUNG ELECTRONICS CO., LTD.) 06 September 2017 (2017-09-06) See paragraphs [0089]-[0093]; claim 1; and figure 6. | 1-15 |
| A | KR 10-2018-0025710 A (SAMSUNG ELECTRONICS CO., LTD.) 09 March 2018 (2018-03-09) See paragraphs [0036]-[0046]; claim 1; and figure 2. | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2023** | **26 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/009256**

| Patent document cited in search report | | | Publication date (day/month/year) | Patent family member(s) | | | Publication date (day/month/year) |
|---|---|---|---|---|---|---|---|
| US | 2019-0356349 | A1 | 21 November 2019 | CN | 109219930 | A | 15 January 2019 |
| | | | | CN | 109219930 | B | 18 May 2021 |
| | | | | EP | 3471283 | A1 | 17 April 2019 |
| | | | | EP | 3471283 | A4 | 03 July 2019 |
| | | | | EP | 3471283 | B1 | 02 June 2021 |
| | | | | JP | 2019-527507 | A | 26 September 2019 |
| | | | | JP | 6784438 | B2 | 11 November 2020 |
| | | | | KR | 10-2019-0027865 | A | 15 March 2019 |
| | | | | KR | 10-2161424 | B1 | 05 October 2020 |
| | | | | US | 10742249 | B2 | 11 August 2020 |
| | | | | WO | 2018-010100 | A1 | 18 January 2018 |
| US | 2016-0174168 | A1 | 16 June 2016 | | None | | |
| KR | 10-1638709 | B1 | 11 July 2016 | BR | 112014003550 | A2 | 14 March 2017 |
| | | | | BR | 112014003550 | B1 | 03 May 2022 |
| | | | | CN | 104025675 | A | 03 September 2014 |
| | | | | CN | 104025675 | B | 08 May 2018 |
| | | | | EP | 2745581 | A1 | 25 June 2014 |
| | | | | EP | 2745581 | B1 | 09 December 2015 |
| | | | | JP | 2014-524684 | A | 22 September 2014 |
| | | | | JP | 5794652 | B2 | 14 October 2015 |
| | | | | KR | 10-2014-0035526 | A | 21 March 2014 |
| | | | | MX | 2014001800 | A | 31 March 2014 |
| | | | | US | 2013-0044831 | A1 | 21 February 2013 |
| | | | | US | 9521632 | B2 | 13 December 2016 |
| | | | | WO | 2013-025300 | A1 | 21 February 2013 |
| | | | | ZA | 201400706 | B | 26 May 2021 |
| KR | 10-2017-0101710 | A | 06 September 2017 | KR | 10-2446708 | B1 | 26 September 2022 |
| | | | | US | 10826550 | B2 | 03 November 2020 |
| | | | | US | 2017-0250718 | A1 | 31 August 2017 |
| KR | 10-2018-0025710 | A | 09 March 2018 | CN | 107800455 | A | 13 March 2018 |
| | | | | EP | 3291614 | A1 | 07 March 2018 |
| | | | | EP | 3291614 | B1 | 24 March 2021 |
| | | | | KR | 10-2529686 | B1 | 08 May 2023 |
| | | | | US | 10840962 | B2 | 17 November 2020 |
| | | | | US | 2018-0062684 | A1 | 01 March 2018 |

Form PCT/ISA/210 (patent family annex) (July 2022)